# EUROPÄISCHE PATENTSCHRIFT

(11) **EP 2 309 141 B1**
(45) Veröffentlichungstag und Bekanntmachung des Hinweises auf die Patenterteilung: **01.07.2015**
(21) Anmeldenummer: 10186539.2
(22) Anmeldetag: 05.10.2010
(51) Int. Cl.: F16B 21/06, B60H 1/34, F16B 21/07, F16B 21/08

(54) **Schnappbare Befestigungseinrichtung**
Snapping attachment device
Dispositif de fixation encliquetable

(30) Priorität: 06.10.2009 DE 102009048410
(43) Veröffentlichungstag der Anmeldung: 13.04.2011
(73) Patentinhaber: MAHLE Behr GmbH & Co. KG, 70469 Stuttgart (DE)
(72) Erfinder: Feith, Thomas, 70825, Korntal-Münchingen (DE)
(74) Vertreter: Grauel, Andreas

(56) Entgegenhaltungen:
- EP-A2- 0 240 280
- US-A- 4 012 155
- US-A- 5 207 529

## Beschreibung

Die Erfindung betrifft eine schnappbare Befestigungseinrichtung, die zumindest eine Hakeneinrichtung und zumindest eine Aufnahmeeinrichtung aufweist, und die insbesondere für Aktuatoren von Kraftfahrzeugklimaanlagen geeignet ist. Weiterhin betrifft die Erfindung einen Aktuator, insbesondere einen Aktuator für eine Kraftfahrzeugklimaanlage, sowie eine Kraftfahrzeugklimaanlage.

In vielfältigen Breichen der Technik, wie unter anderem auch im Kraftfahrzeugbau, ist es erforderlich zur Ausbildung komplexer Anlagen eine zum Teil große Anzahl von Einzelkomponenten miteinander zu verbinden. Dies betrifft nicht nur vollständige Anlagen, sondern auch bereits einzelne Baugruppen, die zusammengefügt werden, und anschließend als einzelne vorgefertigte Baugruppe mit anderen vorgefertigten Baugruppen zu einer größeren Einheit zusammengefügt werden. Insbesondere betrifft dies Baugruppen, die als vorgefertigte Baugruppe haridelsfähig sind.

Ein Beispiel für derartige, als solche eigenständig vertreibbare Baugruppen, sind Klimaanlagen für Kraftfahrzeuge. Mittlerweile haben derartige Kraftfahrzeugklimaanlagen eine beachtliche Komplexität erreicht. So stellen beispielsweise sogenannte Zweizonenklimaanlagen, die nicht nur heizen, sondern auch kühlen können, heutzutage den Standard bei Kraftfahrzeugen dar. Bereits für die Darstellung der Standardfunktionen derartiger Standard-Kraftfahrzeugklimaanlagen ist es erforderlich, eine relativ große Anzahl an Luftleitelementen (wie beispielsweise Luftleitklappen, Jalousien und dergleichen) gezielt und in aller Regel unabhängig voneinander anzusteuern. Auch wenn es manchmal möglich ist, die Steuereingaben der Stellelemente (wie beispielsweise von Bedienhebeln oder Bedienknöpfen) auf mechanischem Weg an die entsprechenden Luftleitelemente der Kraftfahrzeugklimaanlage zu übertragen (wie beispielsweise mit Hilfe von Steilzügen, flexiblen Dreh-wellen und dergleichen), so erweist es sich häufig als erforderlich zumindest teilweise Luftleitelemente unter Verwendung von elektrischen Aktuatoren zu verstellen.

Derartige Aktuatoren müssen einerseits fest und dauerhaft an der Kraftfahrzeugklimaanlage befestigt werden. Insbesondere soll weder ein "Losrütteln" mit der Zeit möglich sein, noch sollen die Aktuatoren von Anfang an mit einem gewissen Spiel mit der Kraftfahrzeugklimaanlage verbunden sein, da dies zu unerwünschten Geräuschen und gegebenenfalls auch zu einem Ausfall der Kraftfahrzeugklimaanlage führen kann. Andererseits soll die Befestigung nach Möglichkeit möglichst kostengünstig sein und darüber hinaus möglichst schnell und einfach montierbar sein.

Ein heutzutage weitverbreitetes Verfahren, um derartige Aktuatoren an Gehäusen von Kraftfahrzeugklimaanlagen zu befestigen, ist das Befestigen der Aktuatoren unter Verwendung von Schrauben, die durch entsprechende, am Aktuator ausgebildete Durchgangslöcher oder Montagerohren hindurch gesteckt werden und in entsprechend vorbereitete Ausnehmungen (häufig Montagedome mit Sackloch) der Kraftfahrzeugklimaanlage eingeschraubt werden). Ein derartiges Verschrauben ist jedoch relativ aufwändig und erfordert eine nicht unbedeutende Montagezeit. Darüber hinaus kann es bei der Verwendung von Schrauben leicht zu einem Losrütteln mit der Zeit kommen.

In FR 2 743 118 A1 wird eine Vorrichtung zur Befestigung eines Aktuators am Gehäuse einer Kraftfahrzeugklimaanlage vorgeschlagen. Dazu wird der Aktuator mit Befestigungslaschen versehen, in die Befestigungsstifte, die an der Gehäusewand vorgesehen sind, eingesteckt werden. Die Stifte weisen klipsartige verrastende Befestigungsvorsprünge auf, die die Befestigungslaschen des Aktuators hintergreifen. Die Kontaktfläche zwischen den Befestigungsvorsprüngen des Befestigungsstifts sowie den Befestigungslaschen sind jeweils flach und senkrecht zur Fügerichtung zwischen Befestigungsstift und Aktuator ausgebildet. Um die Bauteile miteinander zu verklipsen ist es erforderlich, dass ein ausreichendes Spiel vorgesehen wird, da ansonsten die Befestigungsvorsprünge die Befestigungslaschen nicht hintergreifen können.

Die EP 0 240 280 A2, die US 5 207 529 und die US 4 012 155 offenbaren jeweils eine Vorrichtung zur schnellen Verbindung von strukturellen Elementen.

Es besteht demnach ein Erfordernis, schnappbare Befestigungseinrichtungen, insbesondere schnappbare Befestigungseinrichtungen für Aktuatoren von Kraftfahrzeugklimaanlagen weiter zu verbessern.

Die Aufgabe der Erfindung ist es daher verbesserte schnappbare Befestigungseinrichtungen vorzuschlagen.

Dazu wird vorgeschlagen, eine schnappbare Befestigungseinrichtung, insbesondere eine schnappbare Befestigungseinrichtung für Aktuatoren von Kraftfahrzeugklimaarriagen, die zumindest eine Hakeneinrichtung und zumindest eine Aufnahmeeinrichtung aufweiset, derart auszubilden, dass-zumindest ein Hinterschneidungsbereich zumindest einer Hakeneinrichtung und/oder zumindest einer Aufnahmeeinrichtung zumindest bereichsweise angeschrägt ausgeführt ist, wobei zumindest eine Hakeneinrichtung und/oder zumindest eine Aufnahmeeinrichtung zumindest eine Durchgangsöffnung aufweist.

Dank dieser Ausführung ist es möglich, dass sich eine Erweiterungsbewegung (zum Beispiel ein Ausdehnen) der zumindest einen Hakeneinrichtung und/oder eine Verjüngungsbewegung (zum Beispiel ein sich Zusammenziehen) der zumindest einen Aufnahmeeinrichtung in einer Art Anzugskraft umgesetzt wird, die die mit der Hakeneinrichtung verbundenen Baugruppen sowie die mit der Aufnahmeeihnchtung verbundenen Baugruppen aufeinander zubewegt. Der bzw. die entsprechenden Hinterschneidungsbereiche sind also nicht mit einem im Wesentlichen senkrecht zur Fügerichtung verlaufenden Hinterschneidungsbereich versehen, sondern weisen einen Winkel zur Fügerichtung auf (dieser kann beispielsweise einen Winkel aufweisen, der einem Intervall entnommen ist, dessen Unter- und/öder Obergrenze bei 10°, 20°, 30°, 400°, 45°, 50°, 600°, 70° oder 80°) liegen kann. Insbesondere ist es möglich, den Winket derart zu wählen, dass sich eine selbsttätige Anzugsbewegung ergeben kann, bzw. eine einmal eingenommene Position nur unter Ausübung einer relativ großen Kraft wieder verlassen werden kann. Insbesondere ist es mit der vorgeschlagenen Ausbildungsweise auch möglich, dass die Verbindung der Teile der schnappbaren Befestigungseinrichtung spielfrei erfolgen kann. Zugegebenermaßen ist es bei der vorgeschlagenen Bauform (im Verhältnis zu bisherigen schnappbaren Befestigungseinrichtungen mit einem "senkrechten" Hinterschneidungsbereich) möglich, dass sich die schnappbare Befestigung beim Auftreten von großen Kräften selbsttätig öffnen kann. Dies kann durchaus einen gewissen Nachteil darstellen. Jedoch kann in vielen Anwendungsbereichen dieser systemimmanente Nachteil toleriert werden, insbesondere da die systemimmanenten Vorteile des vorgeschlagenen Systems diese Nachteile deutlich überwiegen können. Darüber hinaus kann sich diese Eigenschaft der schnäppbaren Befestigungseinrichtung in manchen Anwendungsgebieten im Gegenteil als vorteilhaft erweisen. Als Hakeneinrichtung können im Wesentlichen beliebige Formen verwendet werden, und nicht nur klassische Hakenelemente (gegebenenfalls auch eine Mehrzahl von Hakenelementen).

Insbesondere können beispielsweise im Wesentlichen radialsymmetrisch ausgebildete Elemente verwendet werden. Entsprechendes gilt auch für die Aufnahmeeinrichtungen. Diese sind erfindungsgemäß als eine Art Durchgangsöffnung, als eine Art Ausnehmung, eine Art Öse oder dergleichen ausgebildet.

Vorteilhaft ist es, wenn die schnappbare Befestigungseinrichtung derart ausgebildet ist, dass die schnappbare Befestigungseinrichtung, insbesondere des zumindest einen Hinterschneidungsbereiches, selbstanschmiegend und insbesondere spielfrei ausgebildet ist. Mit einer derartigen Ausführungsweise kann die schnappbare Befestigungseinrichtung mit relativ großen Toleranzen ausgeführt werden, was die Herstellungskosten verringern kann. Aufgrund der selbstanschmiegenden Ausführungsweise, also eine Ausführungsweise, bei der die zumindest eine Hakeneinrichtung und die zumindest eine Aufnahmeeinrichtung derart ausgebildet sind, dass sich diese bauartbedingt in einer Verschlussstellung aufeinander zu bewegen ist es möglich, dass die entsprechenden Bauteile fest miteinander verbunden sind, und insbesondere keine Klappergeräusche oder dergleichen entstehen können.

Bevorzugt ist es dabei, wenn bel der schnappbaren Befestigungseinrichtung zumindest ein Hinterschneidungsbereich zumindest bereichsweise sphärisch ausgebildet ist. Durch eine derartige Formgebung ist es insbesondere möglich, dass die betreffende Hakeneinrichtung und/oder Aufnahmeeinrichtung unter einem gewissen Winkel befestig werden kann, ohne dass die Festigkeit oder sonstige Eigenschaften der schnappbaren Befestigungseinrichtung hierunter leiden müssen. Dadurch Ist es beispielsweise möglich, dass die schnappbare Befestigungseinrichtung mit größeren Toleranzen gefertigt werden kann und/oder gewisse Lagetoleranzen der schnappbaren Befestigungseinrichtung besonders einfach ausgeglichen werden können. Speziell ist ein zumindest bereichsweise kugelartiger bzw. kugelpfannenartiger Aufbau der Hakeneinrichtung bzw. der Aufnahmeeinrichtung möglich.

Besonders vorteilhaft ist es weiterhin, wenn bei der schnappbaren Befestigungseinrichtung zumindest eine Hakeneinrichtung und zumindest eine Aufnahmeeinrichtung zumindest bereichsweise zueinander formschlüssig ausgebildet sind. Auf diese Weise können relativ große Flächen von Hakeneinrichtung und Aufnahmeeinrichtung (insbesondere auch große Bereiche der entsprechenden Hinterschneidungsbereiche) miteinander in Kontakt treten, sodass eine besonders haltbare und stabile Verbindung realisiert werden kann, die insbesondere auch besonders große Kräfte aufnehmen kann.

Weiterhin ist es möglich, die schnappbare Befestigungseinrichtung derart auszubilden, dass zumindest eine Hakeneinrichtung und/oder zumindest eine Aufnahmeeinrichtung zumindest eine Durchgangsöffnung aufweist. Eine derartige Ausführungsweise macht es möglich, dass bei einem Zusammenfügen einer Hakeneinrichtung und einer Aufnahmeeinrichtung gegebenenfalls auftretende geschlossene Gastaschen vermieden werden können, und sich auf diese Weise die Befestigungseinrichtung bei einem Fügevorgang quasi "selbst entlüftet". Dadurch können die erforderlichen Fügekräfte gegebenenfalls deutlich vermindert werden und/oder sich ein Lösen der Verbindung unmittelbar nach Herstellung der Verbindung vermieden werden. Die Durchgangsöffnung kann in an sich beliebiger Art und Weise ausgebildet werden, wie beispielsweise als Bohrung, Kerbe oder dergleichen, Insbesondere sollte sie eine Fluidverbindung zwischen einem "Gastaschenbereich" der schnappbaren Befestigungseinrichtung und der Umgebung ausbilden.

Besonders bevorzugt ist es dabei, wenn die schnappbare Befestigungseinrichtung derart ausgebildet und eingerichtet ist, dass sich die schnappbare Befestigungseinrichtung, insbesondere die zumindest eine Durchgangsöffnung, im montierten Zustand der schnappbaren Befestigungseinrichtung selbst verschließ. Auf diese Weise ist es möglich, dass nur eine "Gastasche" der Befestigungseinrichtung entlüftet wird, es aber andererseits nicht zu einer Undichtigkeit der beiden, mit Hilfe der schnappbaren Befestigungseinrichtung miteinander verbundenen Baugruppen kommt. Die selbst verschließende Ausführungsweise kann einfach durch eine formschlüssige Verbindung von Hakeneinrichtung und Aufnahmeeinrichtung realisiert werden. In diesem Fall ist es nicht unbedingt erforderlich, zusätzliche Bauteile vorzusehen, was die Herstellungskosten verringern kann. Selbstverständlich ist es aber auch möglich, zusätzliche Bauteile vorzusehen, wie beispielsweise sich selbst verschließende Klappen oder dergleichen.

Weiterhin ist es bevorzugt, wenn bei der schnappbaren Befestigungseinrichtung eine Mehrzahl von Hakeneinrichtungen und/oder eine Mehrzahl von Aufnahmeeinrichtungen vorgesehen ist, wie insbesondere drei Hakeneinrichtungen und/oder drei Aufnahmeeinrichtungen. In diesem Fall ist es möglich, dass die möglichen Haltekräfte der resultierenden schnappbaren Befestigungseinrichtung besonders hoch sein können. Zusätzlich kann auch eine besonders gute Lagefixierung in unterschiedlichen Raumrichtungen realisiert werden, insbesondere wenn drei Hakeneinrichtungen und/oder auch drei Aufnahmeeinrichtungen vorgesehen sind, können die miteinander verbundenen Bauteile zwar schräg stehen, es kann jedoch nicht zu einem "Wackeln" der Anordnung bzw. zu einer Vorspannung einer Haken-Aufnahme-Befestigung kommen, was von Vorteil sein kann.

Sinnvoll ist es weiterhin, wenn bei der schnappbaren Befestigungseinrichtung zumindest eine Hakeneinrichtung und/oder zumindest eine Aufnahmeeinrichtung jeweils paarweise vorgesehen sind. Dadurch kann sich ein besonders einfacher und kostengünstiger Aufbau der Befestigungseinrichtung ergeben.

Weiterhin ist es von Vorteil, wenn die schnappbare Befestigungseinrichtung zumindest bereichsweise aus einem thermoplastischen Kunststoffmaterial ausgebildet ist und/oder in einem Spritzgussverfahren gefertigt ist. Auf diese Weise kann die schnappbare Befestigungseinrichtung besonders einfach und kostengünstig ausgeformt werden.

Vorteilhaft ist es weiterhin, wenn die schnappbare Befestigungseinrichtung derart ausgebildet ist, dass die Fügerichtung im Wesentlichen in axialer Richtung verläuft. Auf diese Weise kann ein besonders einfacher und schneller Montagevorgang, insbesondere durch einfaches Aufsetzen und Andrücken, realisiert werden.

Weiterhin wird ein Aktuator, insbesondere ein Aktuator für eine Kraftfahrzeugklimaanlage vorgeschlagen, der zumindest eine schnappbare Befestigungseinrichtung mit dem oben beschriebenen Aufbau aufweist Ein derartiger Aktuator weist die bereits vorab beschriebenen Eigenschaften und Vorteile in analoger Weise auf.

Weiterhin wird eine Kraftfahrzeugklimaanlage vorgeschlagen, die zumindest eine schnappbare Befestigungseinrichtung mit dem oben beschriebenen Aufbau und/oder zumindest einen Aktuator mit dem oben beschriebenen Aufbau aufweist. Auch die Kraftfahrzeugklimaanlage ist dann die bereits vorab beschriebenen Verteile und Eigenschaften in analoger Weise auf.

Im Folgenden wird die Erfindung anhand vorteilhafter Ausführungsbeispiele und unter Bezugnahme auf die beigefügte Zeichnung näher erläutert Es zeigen:
- Fig. 1:: ein erstes Ausführungsbeispiel für eine Schnappverbindung in schematischem Querschnitt von der Seite aus gesehen;
- Fig. 2:: ein zweites Ausführungsbeispiel für eine Schnappverbindung in schematischem Querschnitt von der Seite aus gesehen;
- Fig. 3:: eine mögliche Ausführungsform für einen Haltearm in schematischer Draufsicht von oben;
- Fig. 4:: ein drittes Ausführungsbeispsel für eine Schnappverbindung in schematischem Querschnitt von der Seite aus gesehen;
- Fig. 5:: ein viertes Ausführungsbeispiel für eine Schnappverbindung in schematischem Querschnitt von der Seite aus gesehen;
- Fig. 6:: ein fünftes Ausführungsbeispiel für eine Schnappverbindung in schematischem Querschnitt von der Seite aus gesehen;
- Fig. 7;: ein sechstes Ausführungsbeispiel für eine Schnappverbindung in schematischem Querschnitt von der Seite aus gesehen.

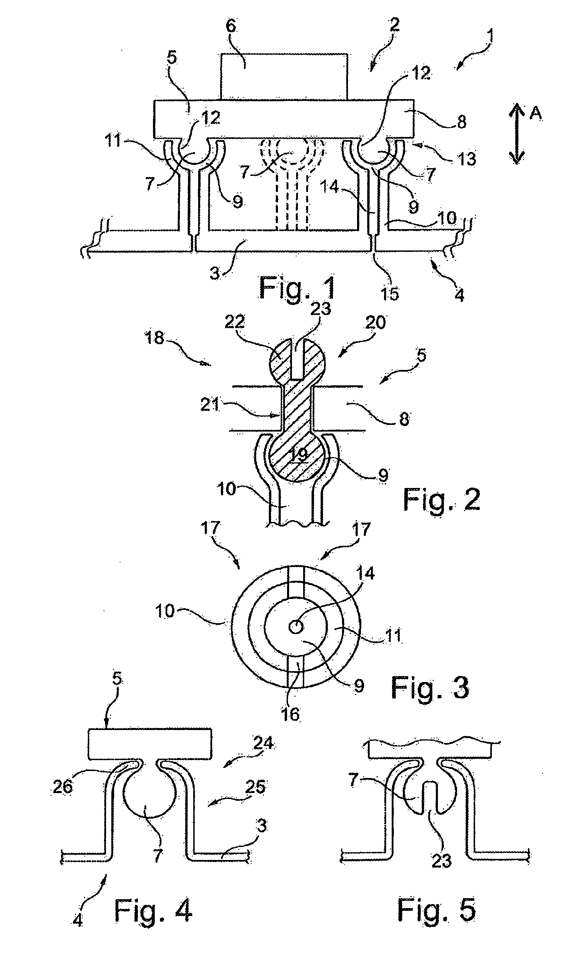

In Fig. 1 list ein erstes mögliches Ausführungsbeispiel für eine Schnappverbindung 1 in schematischem Querschnitt von der Seite aus gesehen dargestellt. Die Schnappverbindung 1 dient zur Befestigung einer Aktuatorbaugruppe 2 am Gehäuse 3 einer Kraftfahrzeugklimaanlage 4 (die Kraftfahrzeugklimaanlage 4 ist vorliegend nur schematisch dargestellt). Die Aktuatorbaugruppe 2 besteht im Wesentlichen aus dem eigentlichen Aktuator 6 und einer Befestigungsplatte 5. Die Befestigungsplatte 5 weist auf ihrer dem Aktuator 6 beabstandeten Unterseite vorliegend insgesamt drei Kugeln 7 auf. Die Befestigungsplatte 5 (also die "eigentliche" Platte 8 sowie die Kugeln 7) kann beispielsweise unter Verwendung eines Spritzgussvorgangs aus einem thermoplastischen, elastischen Kunststoffmaterial ausgebildet sein. Die drei Kugeln 7 sind vorzugsweise in der Art eines (gleichschenkligen und/oder gleichwinkligen) Dreiecks angeordnet, was in der Fig. 1 dadurch symbolisiert wird, dass eine der Kugeln 7, nämlich die Kugel 7, die außerhalb der Querschnittsebene angeordnet ist, durch eine gestrichelte Linie dargestellt ist.

Die Kugeln 7 sind in Kugelpfannen 9 eingeschnappt, welche am axial äußeren Ende von Befestigungsstiften 10 vorgesehen sind. Die Befestigungsstifte 10 sind im vorliegenden Ausführungsbeispiel einstückig mit dem Gehäuse 3 der Kraftfahrzeugklimaanlage 4 ausgeformt (beispielsweise durch einen Spritzgussvorgang unter Verwendung von thermoplastischem Kunststoffmaterial). Wie man Fig. 1 entnehmen kann, weist die Kugelpfanne 9 in axialer Richtung A eine Erstreckung auf, die größer ist als der Radius der Kugelpfanne 9 bzw. der Kugel 7. Dadurch bilden die vorderen Enden 11 der Kugelpfannen 9 in Kombination mit den Rückseitenbereichen 12 der Kugeln 7 einen Hintergreifbereich 13. Kugelpfannen 9 und Kugeln 7 sind also ineinander eingeschnappt und können nur durch Aufbringung einer entsprechend großen Kraft voneinander getrennt werden. Die Ausbildung der Schnappverbindung 1 kann durch einfaches Andrücken der Aktuatorbaugruppe 2 an die Kraftfahrzeugklimaanlage 4 unter Ausübung einer ausreichenden Andruckkraft realisiert werden. Aufgrund der gewählten Ausbildung des vorderen Bereichs 11 der Kugelpfannen 9 sowie der Rückseitenbereiche 12 der Kugeln 7 wirkt der resultierende Hintergreifbereich 13 der Schnappverbindung derart, dass die Aktuatorbaugruppe 2 mit einer gewissen Haltekraft in ihren Sitz gezogen wird und insbesondere auch kein Spiel zwischen Aktuatorbaugruppe 2 und dem Gehäuse 3 der Kraftfahrzeugklimaanlage 4 vorhanden ist.

Die Befestigungsstifte 10 sind, wie aus Fig. 1 ersichtlich ist, mit einem Hohlraum 14 versehen, der jeweils in eine im Gehäuse 3 der Kraftfahrzeugklimaanlage 4 ausgebildete Bohrung 15 übergeht. Wenn die Aktuatorbaugruppe 2 auf das Gehäuse 3 aufgeschnappt wird, kann dadurch der im Hohlraum 14 der Befestigungsstifte 10 entstehende Überdruckdurch die Bohrungen 15 in das Innere der Kraftfahrzeugklimaanlage 4 entweichen. Ist die Schnappverbindung 1 fertig ausgebildet, so liegen die Kugelpfannen 9 jedoch bündig an den Kugel 7 der Befestigungsplatte 5 an. Dadurch ist eine Fluidverbindung zwischen dem Inneren der Kraftfahrzeugklimaanlage 4 der Umgebung (im Wesentlichen) unterbunden.

Um das Aufspreizeh der Kugelpfannen 9 bei der Ausbildung der Schnappverbindung 1 zu erleichtern ist es möglich, die Kugelpfannen 9 mit einer schlitzartngen Nut 16 zu versehen. Dies ist insbesondere in Fig. 3 ersichtlich, die den Aufbau der Befestigungsstifte 10 in einer schematischen Draufsicht von oben darstellt. Dank der schlitzartigen Nut 16 können sich die resultierenden Halbschalen 17 der Kugelpfannen 9 beim Eindrücken der Kugel 7 leichter voneinander weg und anschließend wieder aufeinander zu bewegen.

In Fig. 2 ist eine Variation einer Schnappverbindung 18 dargestellt, die eine Abwandlung der in Fig. 1 dargestellten Schnappverbindung 1 darstellt. Im dargestellten Ausführungsbeispiel der Schnappverbindung 18 sind die Kugelbereiche 19 nicht mehr einstückig an der Platte 8 der Befestigungsplatte 5 angespritzt. Vielmehr bildet der Kugelbereich 19, der in die Kugelpfannen 9 der Befestigungsstifte 10 eingedrückt wird, einen Teil eines hantelförmigen Befestigungsstifts 20. Dieser hantelförmige Befestigungsstift 20 kann als separates Bauteil in eine Bohrung 21 eingesteckt werden, die in der Befestigungsplatte 5 ausgebildet ist, Um das Einfügen des hantelförmigen Befestigungsstifts 20 in die Böhrung 21 zu erleichtern ist es möglich, dass einer der beiden Kugelbereiche 22 mit einem Schliff 23 versehen wird.

Die zum Gehäuse 3 der Kraftfahrzeugklimaanlage 4 gehörigen Befestigungssfifte 10 können analog zum in Fig. 1 dargestellten Ausführungsbeispiel ausgeformt sein.

In Fig. 4 ist ein weiteres Ausführungsbeispiel einer Schnappverbindung 24 dargestellt. Die Befestigungsplatte 5 mitsamt der daran einstückig ausgebildeten Kugeln 7 kann bei dem vorliegend dargestellten Ausführungsbeispiel einer Schnappverbindung 24 analog zum in Fig. 1 dargestellten Ausführungsbeispiel 1 ausgebildet sein. Anstelle der in Fig. 1 verwendeten Befestigungsstifte 10 ist im vorliegend dargestellten Ausführungsbeispiel 24 das Gehäuse 3 der Kraftfahrzeugklimaanlage "lediglich" geeignet verformt. Die Verformung ist derart gewählt, dass sich Dome 25 bilden, die mit einer geeignet ausgebildeten Einstecköffnung 26 versehen sind. Um die Befestigungsplatte 5 am Gehäuse 3 zu befestigen ist es erforderlich, dass sich die Einstecköffnungen 26 ausreichend aufweiten, so dass die Kugel 7 hindurchtreten kann. Um dies zu erleichtern ist es möglich, dass im Bereich der Einstecköffnungen 26 schlitzartige Nuten vorgesehen werden. Zusätzlich oder alternativ ist es auch möglich, die Kugeln 7 mit einer schlitzartigen Ausnehmung 23 zu versehen, was in. Fig. 5 dargestellt ist.

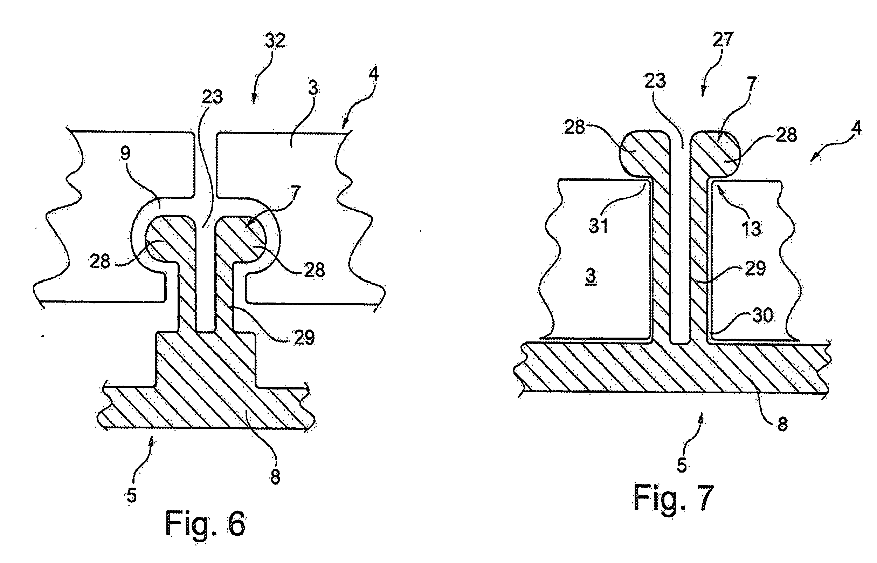

In Fig. 6 und Fig. 7 sind weitere mögliche Ausführungsformen von Schnappverbindungen 27, 32 dargestellt. In beiden Ausführungsbeispielen 27, 32 ist dabei die Kugel 7 (die in den vorliegend in Fig. 6 und 7 dargestellten Ausführungsbeispielen 27, 32 jeweils mit einer schlitzartigen Ausnehmung 23 versehen ist, sodass sich zwei halbkugelförmige Kugelhälften 28 ergeben können) nicht "bündig" mit dem Plattenteil 8 der Befestigungsplatte 5 verbunden, sondern unter Verwendung von Verbindungsstegen 29 in einer gewissen Entfernung von der Befestigungsplatte 5 ausgebildet

Dadurch ist es beim in Fig.6 dargestellten Ausführungsbeispiel der Schnappverbindung 32 möglich, dass die Kugelpfanne 9 im "Inneren" einer Gehäusewand 3 der Kraftfahrzeugklimaanlage 4 ausgebildet ist.

In Fig. 7 sind die Verbindungsstege 29 zwischen Kugel 7 (bzw. Kugelhälften 28) und Befestigungsplatte 5 nochmals verlängert ausgeführt. Dadurch ist es möglich, dass bei der Schnappverbindung 27 die Gehäusewand 3 der Kraftfahrzeugklimaanlage lediglich mit einer Durchgangsbohrung 30 versehen wird und die Kugel 7 auf der "Rückseite" (also auf der der Befestigungsplatte 5 beabstandeten Oberfläche der Gehäusewand 3) angeordnet ist und diese hintergreift. Der Hintergreifbereich 13 liegt dabei bei der Schnappverbindung 27 gemäß Fig. 7 in Form eines Kontakts zwischen Bereichen der Kugel 7 (bzw. der Halbkugeln 28) und einem trichterförmigen Senkloch 31 der Durchgangsbohrung 30 vor.

## Patentansprüche

1. Schnappbare Befestigungseinrichtung (1, 18, 24, 27, 32), insbesondere für Aktuatoren (6) von Kraftfahrzeugklimaanlagen (4), aufweisend zumindest eine Hakeneinrichtung (7, 19, 28) und zumindest eine Aufnahmeeinrichtung (9, 25, 31), wobei zumindest ein Hinterscheidungsbereich (13) zumindest einer Hakeneinrichtung (7, 19, 28) und/oder zumindest einer Aufnahmeeinrichtung (9, 25, 31) zumindest bereichsweise angeschrägt ausgeführt ist, **dadurch gekennzeichnet, dass** zumindest eine Hakeneinrichtung (7, 19, 28) und/oder zumindest eine Aufnahmeeinrichtung (9, 25, 31) zumindest eine Durchgangsöffnung (14, 15) aufweist.

2. Schnappbare Befestigungseinrichtung (1, 18, 24, 27, 32) nach Anspruch 1, **dadurch gekennzeichnet, dass** die schnappbare Befestigungseinrichtung (1, 18, 24, 27, 32), insbesondere der zumindest eine Hinterschneidungsbereich (13), selbstanschmiegend, insbesondere spielfrei ausgebildet ist.

3. Schnappbare Befestigungseinrichtung (1, 18, 24, 27, 32) nach Anspruch 1 oder 2, **dadurch gekennzeichnet, dass** zumindest ein Hinterschneidungsbereich (13) zumindest bereichsweise sphärisch ausgebildet ist.

4. Schnappbare Befestigungseinrichtung (1, 18, 24, 27, 32) nach einem der vorangehenden Ansprüche, **dadurch gekennzeichnet, dass** zumindest eine Hakeneinrichtung (7, 19, 28) und zumindest eine Aufnahmeeinrichtung (9, 25, 31) zumindest bereichsweise zueinander formschlüssig ausgebildet sind.

5. Schnappbare Befestigungseinrichtung (1, 18, 24, 27, 32) nach einem der vorangehenden Ansprüche, **dadurch gekennzeichnet, dass** die schnappbare Befestigungseinrichtung (1, 18, 24, 27, 32) derart ausgebildet und eingerichtet ist, dass sich die schnappbare Befestigungseinrichtung (1, 18, 24, 27, 32), insbesondere die zumindest eine Durchgangsöffnung (14, 15), im montierten Zustand der schnappbaren Befestigungseinrichtung (1, 18, 24, 27, 32) selbst verschließt.

6. Schnappbare Befestigungseinrichtung (1, 18, 24, 27, 32) nach einem der vorangehenden Ansprüche, **gekennzeichnet durch** eine Mehrzahl von Hakeneinrichtungen (7, 19, 28) und/oder eine Mehrzahl von Aufnahmeeinrichtungen (9, 25, 31), insbesondere **gekennzeichnet durch** drei Hakeneinrichtungen (7, 19, 28) und/oder drei Aufnahmeeinrichtungen (9, 25, 31).

7. Schnappbare Befestigungseinrichtung (1, 18, 24, 27, 32) nach einem der vorangehenden Ansprüche, **dadurch gekennzeichnet, dass** die zumindest einen Hakeneinrichtungen (7, 19, 28) und/oder die zumindest einen Aufnahmeeinrichtungen (9, 25, 31) jeweils paarweise vorgesehen sind.

8. Schnappbare Befestigungseinrichtung (1, 18, 24, 27, 32) nach einem der vorangehenden Ansprüche, **dadurch gekennzeichnet, dass** diese zumindest bereichsweise aus einem thermoplastischen Kunststoffmaterial ausgebildet ist und/oder in einem Spritzgussverfahren gefertigt ist.

9. Schnappbare Befestigungseinrichtung (1, 18, 24, 27, 32) nach einem der vorangehenden Ansprüche, **dadurch gekennzeichnet, dass** die Fügerichtung im Wesentlichen in axialer Richtung (A) verläuft.

10. Aktuator (6), insbesondere Aktuator (6) für eine Kraftfahrzeugklimaanlage (4), aufweisend zumindest eine schnappbare Befestigungseinrichtung (1, 18, 24, 27, 32) nach einem der Ansprüche 1 bis 9.

11. Kraftfahrzeugklimaanlage (4), aufweisend zumindest eine schnappbare Befestigungseinrichtung (1, 18, 24, 27, 32) nach einem der Ansprüche 1 bis 9 und/oder aufweisend zumindest einen Aktuator (6) nach Anspruch 10.

## Claims

1. A snap-action fastening device (1, 18, 24, 27, 32), in particular for actuators (6) of motor vehicle air-conditioning systems (4), comprising at least one hook device (7, 19, 28) and at least one receiving device (9, 25, 31), wherein at least one undercut region (13) of at least one hook device (7, 19, 28) and/or at least one receiving device (9, 25, 31) is bevelled at least in regions, **characterised in that** at least one hook device (7, 19, 28) and/or at least one receiving device (9, 25, 31) comprises at least one through-opening (14, 15).

2. The snap-action fastening device (1, 18, 24, 27, 32) according to claim 1, **characterised in that** the snap-action fastening device (1, 18, 24, 27, 32), in particular the at least one undercut region (13), is self-mating, in particular without play.

3. The snap-action fastening device (1, 18, 24, 27, 32) according to claim 1 or 2, **characterised in that** at least one undercut region (13) is spherical, at least in regions.

4. The snap-action fastening device (1, 18, 24, 27, 32) according to one of the preceding claims, **characterised in that** at least one hook device (7, 19, 28) and at least one receiving device (9, 25, 31) interlock with one another, at least in regions.

5. The snap-action fastening device (1, 18, 24, 27, 32) according to one of the preceding claims, **characterised in that** the snap-action fastening device (1, 18, 24, 27, 32) is formed and arranged in such a way that the snap-action fastening device (1, 18, 24, 27, 32) closes itself, in particular the at least one through-opening (14, 15), in the mounted state of the snap-action fastening device (1, 18, 24, 27, 32).

6. The snap-action fastening device (1, 18, 24, 27, 32) according to one of the preceding claims, **characterised by** a plurality of hook devices (7, 19, 28) and/or a plurality of receiving devices (9, 25, 31), in particular **characterised by** three hook devices (7, 19, 28) and/or three receiving devices (9, 25, 31).

7. The snap-action fastening device (1, 18, 24, 27, 32) according to one of the preceding claims, **characterised in that** the at least one hook device (7, 19, 28) and/or the at least one receiving device (9, 25, 31) are provided in pairs in each case.

8. The snap-action fastening device (1, 18, 24, 27, 32) according to one of the preceding claims, **characterised in that** this is formed at least in regions from a thermoplastic material and/or is fabricated in an injection moulding method.

9. The snap-action fastening device (1, 18, 24, 27, 32) according to one of the preceding claims, **characterised in that** the joining direction runs substantially in the axial direction (A).

10. An actuator (6), in particular an actuator (6) for a motor vehicle air-conditioning system (4), comprising at least one snap-action fastening device (1, 18, 24, 27, 32) according to one of claims 1 to 9.

11. A motor vehicle air-conditioning system (4), comprising at least one snap-action fastening device (1, 18, 24, 27, 32) according to one of claims 1 to 9 and/or comprising at least one actuator (6) according to claim 10.

## Revendications

1. Dispositif de fixation encliquetable (1, 18, 24, 27, 32), en particulier pour des actionneurs (6) de systèmes de climatisation (4) de véhicules automobiles, présentant au moins un dispositif à crochet (7, 19, 28) et au moins un dispositif de logement (9, 25, 31), où au moins une zone de contre-dépouille (13) d'au moins un dispositif à crochet (7, 19, 28) et / ou d'au moins un dispositif de logement (9, 25, 31) est réalisée au moins partiellement de façon biseautée, **caractérisé en ce qu'**au moins un dispositif à crochet (7, 19, 28) et / ou au moins un dispositif de logement (9, 25, 31) présente au moins une ouverture de passage (14, 15).

2. Dispositif de fixation encliquetable (1, 18, 24, 27, 32) selon la revendication 1, **caractérisé en ce que** le dispositif de fixation encliquetable (1, 18, 24, 27, 32), en particulier la zone de contre-dépouille (13) au moins au nombre de un, est configuré(e) en s'auto-adaptant, en particulier sans jeu.

3. Dispositif de fixation encliquetable (1, 18, 24, 27, 32) selon la revendication 1 ou 2, **caractérisé en ce qu'**au moins une zone de contre-dépouille (13) est configurée au moins partiellement de façon sphérique.

4. Dispositif de fixation encliquetable (1, 18, 24, 27, 32) selon l'une quelconque des revendications précédentes, **caractérisé en ce qu'**au moins un dispositif à crochet (7, 19, 28) et au moins un dispositif de logement (9, 25, 31) sont configurés en étant au moins partiellement à complémentarité de forme l'un par rapport à l'autre.

5. Dispositif de fixation encliquetable (1, 18, 24, 27, 32) selon l'une quelconque des revendications précédentes, **caractérisé en ce que** le dispositif de fixation encliquetable (1, 18, 24, 27, 32) est conçu et agencé de manière telle, que le dispositif de fixation encliquetable (1, 18, 24, 27, 32), en particulier l'ouverture de passage (14, 15) au moins au nombre de un, se ferme automatiquement quand le dispositif de fixation encliquetable (1, 18, 24, 27, 32) est à l'état monté.

6. Dispositif de fixation encliquetable (1, 18, 24, 27, 32) selon l'une quelconque des revendications précédentes, **caractérisé par** une pluralité de dispositifs à crochet (7, 19, 28) et / ou par une pluralité de dispositifs de logement (9, 25, 31), en particulier **caractérisé par** trois dispositifs à crochet (7, 19, 28) et / ou trois dispositifs de logement (9, 25, 31).

7. Dispositif de fixation encliquetable (1, 18, 24, 27, 32) selon l'une quelconque des revendications précédentes, **caractérisé en ce que** les dispositifs à crochet (7, 19, 28) au moins au nombre de un et / ou les dispositifs de logement (9, 25, 31) au moins au nombre de un sont prévus à chaque fois en étant par paires.

8. Dispositif de fixation encliquetable (1, 18, 24, 27, 32) selon l'une quelconque des revendications précédentes, **caractérisé en ce que** ce dispositif de fixation est conçu en se composant au moins partiellement d'une matière thermoplastique et / ou est fabriqué suivant un procédé de moulage par injection.

9. Dispositif de fixation encliquetable (1, 28, 24, 27, 32) selon l'une quelconque des revendications précédentes, **caractérisé en ce que** la direction de jointoiement s'étend sensiblement dans la direction axiale (A).

10. Actionneur (6), en particulier actionneur (6) pour un système de climatisation (4) d'un véhicule automobile, présentant au moins un dispositif de fixation encliquetable (1, 18, 24, 27, 32) selon l'une quelconque des revendications 1 à 9.

11. Système de climatisation (4) d'un véhicule automobile, présentant au moins un dispositif de fixation encliquetable (1, 18, 24, 27, 32) selon l'une quelconque des revendications 1 à 9 et / ou présentant au moins un actionneur (6) selon la revendication 10.
